# EUROPÄISCHE PATENTSCHRIFT

(11) **EP 0 615 779 B1**
(45) Veröffentlichungstag und Bekanntmachung des Hinweises auf die Patenterteilung: **16.07.1997**
(21) Anmeldenummer: 94101649.5
(22) Anmeldetag: 03.02.1994
(51) Int. Cl.: B01D 67/00, B01D 71/30

(54) **Oleophob modifizierte mikroporöse Polymere**
Oleophobic modified microporous polymers
Polymères microporeux modifiés pour être oleophobes

(30) Priorität: 16.03.1993 DE 4308369
(43) Veröffentlichungstag der Anmeldung: 21.09.1994
(73) Patentinhaber: W.L. GORE & ASSOCIATES, 85640 Putzbrunn (DE)
(72) Erfinder: Bürger, Wolfgang, Dr., D-81825 München (DE)
(74) Vertreter: Kador & Partner

(56) Entgegenhaltungen:
- EP-A- 0 203 577
- EP-A- 0 260 587
- WO-A-91/01791
- US-A- 5 217 802

## Beschreibung

Die Erfindung betrifft mikroporöse Polymere, welche an der Oberfläche oleophob und gegebenenfalls hydrophil modifiziert sind sowie Verfahren zu deren Herstellung.

Insbesondere auf dem Gebiet der Luft- und Flüssigfiltration besteht ein großer Bedarf an porösen, oleophoben Materialien, insbesondere Membranen, da diese durch öl- und fetthaltige Begleitstoffe rasch kontaminiert werden und dadurch die Filtrationsleistung reduziert wird. Derartige Materialien sind auch zur Herstellung von Dichtungen und von Schutzbekleidung, z.B. für die Chemie, erwünscht.

Es sind bereits poröse Polymere bekannt, die eine oleophobe Modifizierung bzw. Ausrüstung aufweisen. In der US-A-5,116,650 ist z.B. ein mit Teflon^{R} AF, einem speziell modifizierten Polytetrafluorethylen, beschichtetes expandiertes Polytetrafluorethylen (ePTFE) beschrieben. Das Teflon AF wird aus einem perfluorierten Lösungsmittel appliziert und das Produkt zeigt eine sehr gute Ölabweisung. Es hat sich gezeigt, daß die Modifizierung mit Teflon AF häufig uneinheitlich ist und daher ein mehrfaches Ausrüsten des ePTFE erforderlich ist. Zudem wird durch den Aufzug des Polymers die Oberfläche des ePTFE und damit seine Eigenschaften verändert.

Aus der EP-A-0 216 622 ist die sogenannte REPEL-Membran bekannt. Dabei handelt es sich um eine Membran auf Urethan-Acrylatbasis, die mit einem Phobiermittel mit perfluorierten Seitengruppen modifiziert ist. Diese Modifizierung ist jedoch wenig lösungsmittelstabil und zeigt eine geringe thermische Stabilität. Die Porosität der Membran ist aufgrund des Herstellungsverfahrens wenig variierbar.

Aufgabe der vorliegenden Erfindung ist die Bereitstellung einer oleophoben Modifizierung für poröse Polymere, insbesondere poröse Fluorpolymere und ganz besonders für poröse Polytetrafluorethylene (PTFE), welche ausgezeichnete Ölwerte liefert und zugleich lösungsmittelstabil und thermisch stabil ist. Gegebenenfalls sollte die Modifizierung zugleich hydrophile Eigenschaften verleihen.

Gegenstand der Erfindung sind mikroporöse Polymere, die an ihrer Oberfläche mit einem Perfluorpolyether oleophob und gegebenenfalls zusätzlich hydrophil modifiziert sind. Die eingesetzten Perfluorpolyether weisen ein mittleres Molekulargewicht von größer 2000, eine kinematische Viskosität bei 20°C von größer 160 cSt, einen Dampfdruck nach Knudsen von kleiner 5 x 10⁻⁶ bei 20°C und eine Oberflächenspannung bei 20°C von kleiner 25 mN/m auf.

Perfluorpolyether (PFPE) sind bisher vorwiegend als Gleit- und Schmiermittel und als Hydrauliköle eingesetzt worden. Es hat sich gezeigt, daß Polymere, welche PFPE ausgesetzt werden, im allgemeinen ihre Eigenschaften beibehalten.

Es kann jedoch zu Entmischung und Unverträglichkeit an Grenzflächen bzw. Oberflächen der Polymere kommen. Fluorpolymere, insbesondere PTFE und PFPE sind jedoch gut verträglich, vermutlich aufgrund der Strukturähnlichkeit und annähernd gleicher Oberflächenspannung bzw. Oberflächenenergie beider Stoffe. Besonders vorteilhaft ist es bei der oleophoben Modifizierung in allen Schritten polymeridentische Substanzen einzusetzen und hierzu ein geeignetes Oleophobierungsmittel zu wählen.

Die mit PFPE modifizierten Polymere zeigen eine ausgezeichnete Gas- und Wasserdampfdurchlässigkeit und sind verstärkt ölabweisend. Die Modifizierung ist überraschend lösungsmittelstabil und zeigt bis zu hohen Temperaturen thermische Stabilität.

Bevorzugte Ausführungsformen der erfindungsgemäßen Polymere ergeben sich aus den Unteransprüchen.

So handelt es sich bei den Ausgangspolymeren bevorzugt um Polyethylene, Polyurethane, Polypropylene oder Polyester. Insbesondere wählt man Fluorpolymere, bevorzugt Polytetrafluorethylene aus. In geeigneter Weise liegt das Ausgangspolymer in Form einer Membran oder eines Formkörpers oder aber auch in Form eines Granulats vor.

Das Polymer ist vorzugsweise mit 1 bis 40 % (Masseanteil) an PFPE modifiziert. Besonders bevorzugt beträgt der Masseanteil 1 bis 15 %. In geeigneter Weise ist der Perfluorpolyether in den angegebenen Mengen in einem porösen verstreckten Polymer oder einem Granulat enthalten.

Bevorzugte Perfluorpolyether sind solche, welche eine Oberflächenspannung von < 25 mN/m aufweisen. In einer weiteren bevorzugten Ausführungsform besitzt der Perfluorpolyether mindestens zwei Hydroxylgruppen.

Gegenstand der Erfindung ist ferner, ein Verfahren zur Herstellung eines oleophob und gegebenenfalls zusätzlich hydrophil modifizierten Polymers, das dadurch gekennzeichnet ist, daß ein Granulat des Polymers mit einer Lösung oder Mikroemulsion eines Perfluorpolyethers an seiner Oberfläche oleophob und gegebenenfalls zusätzlich hydrophil modifiziert wird. Bevorzugt wird das so modifizierte Granulat in weiteren Verfahrensschritten in eine mikroporöse Struktur übergeführt und extrudiert, verstreckt und gegebenenfalls gesintert. Zur Überführung in eine mikroporöse Struktur sind alle dafür im Stand der Technik bekannten Methoden anwendbar.

Gegenstand der Erfindung ist auch ein Verfahren zur Herstellung eines mikroporösen Polymers, das dadurch gekennzeichnet ist, daß eine mikroporöse Polymermembran oder ein mikroporöser Polymerformkörper mit einer Lösung oder einer Mikroemulsion eines Perfluorpolyethers oleophob und gegebenenfalls zusätzlich hydrophil modifiziert wird.

Als Lösungsmittel für das erstgenannte Verfahren kommen auch Fluorchlorkohlenwasserstoffe und niedermolekulare Fraktionen von PFPE in Frage. Besonders vorteilhaft hat sich hier jedoch der Einsatz von Wasser in Form einer Mikroemulsion des PFPE, insbesondere des Perfluorpolyethers Fe 20, gezeigt. Als Lösungsmittel für das zuletzt genannte Verfahren werden bevorzugt Fluorchlorkohlenwasserstoffe (FCKW), niedermolekulare Fraktionen von Perfluorpolyethern oder Wasser verwendet. Es können auch Mikroemulsionen des Perfluorpolyethers eingesetzt werden. Ganz besonders bevorzugt werden jedoch niedermolekulare Fraktionen von Perfluorpolyethern eingesetzt, oder Wasser. Hier ist die Idee, polymeridentische Substanzen (Lösungsmittel - Modifikator - zu modifizierender Stoff) zu verwenden, am besten verwirklicht und es werden insgesamt gute Ergebnisse erzielt.

Die Applikation aus Fluorchlorkohlenwasserstoffen (z.B. Freon 113) ist zwar möglich und liefert gute Ergebnisse. Die Verwendung ist jedoch in vielen Beziehungen kritisch. Fluorchlorkohlenwasserstoffe haben einen hohen Dampfdruck und sind damit nicht restlos wiedergewinnbar. Außerdem sind sie bekannterweise ozonschädigend. Niedermolekulare Fraktionen von Perfluorpolyethern sind dagegen wiedergewinnbar und damit wirtschaftlich gut einsetzbar. Das selbe gilt für Wasser.

Eine wäßrige Emulsion eines Perfluorpolyethers kann also in zwei Varianten einem (mikroporösen) Polymer z.B. einem Polytetrafluorethylen, Oleophobie verleihen.
1. Über eine Modifizierung aus einer wässrigen Mikroemulsion; der Masseanteil an PFPE im PTFE beträgt dann 1 bis 40 %.
2. Unter Nutzung eines Verfahrens zur Herstellung von gerecktem PTFE wie es in der DE-A-24 17 901 beschrieben ist; anstelle eines Gleitmittels auf Paraffinbasis wird nur die reine PFPE-Mikroemulsion eingesetzt.

Vorteilhaft arbeitet man mit 20 bis 70 ml einer 20%igen Fe 20-Lösung auf 110 g PTFE bzw. 30 bis 80 ml einer 10%igen Fe 20-Lösung auf 110 g PTFE. Man mischt, stellt einen Formkörper her, extrudiert und entfernt in Abwandlung zum oben erwähnten Patent den Wasseranteil der Mikroemulsion bei Temperaturen oberhalb 100°C. Dann reckt man das Material im beliebigen Verhältnis und sintert gegebenenfalls. Der Anteil des PFPE an der äußeren und inneren Oberfläche der mikroporösen Membran beträgt dann zwischen 1 und 15 %, vorteilhafterweise zwischen 2 und 10 %. Man erhält eine oleophobierte PTFE-PFPE-Membran, die vorwiegend aus homogenem, fibrilliertem PTFE besteht. Voraussetzung für eine homogene, mikroporöse Membran, die auf diesem Wege hergestellt wird, ist eine gleichmäßige Benetzung des PTFE-Ausgangsmaterials, die durch Verwendung der Mikroemulsion erreicht wird. Eine teilweise Zugabe von PFPE zu den herkömmlichen Gleitmitteln führt infolge der Nichtmischbarkeit der Substanzen nicht zum Erfolg. Die Mikroemulsion weist dagegen eine sehr kleine Tropfengröße der PFPE im System auf, zwischen 0,002 bis 0,2 µm, und eine ausreichende Benetzungsfähigkeit für das PTFE-Polymerisat.

Alle Perfluorpolyether weisen eine hohe Gasdurchlässigkeit auf und beeinflussen damit die Gasdurchlässigkeit der Membran nicht. Sie besitzen auch eine gute Biokompatibilität und toxische Wirkungen sind nicht bekannt. Gemäß der Erfindung einsetzbare Perfluorpolyether sind im Handel unter der Bezeichnung KRYTOX^{R}, FOMBLIN^{R}, HOSTINERT^{R} oder DEMNUM^{R} erhältlich.

Bekannterweise setzen sich perfluorierte Polyether ausschließlich aus Kohlenstoff-, Fluor- und Sauerstoffatomen zusammen. Die unterschiedlichen Bezeichnungen rühren im wesentlichen von unterschiedlichen Typen der perfluorierten Polyether her, wobei zwischen verzweigten, linearen oder Mischtypen unterschieden wird. Gegebenenfalls können diese Typen darüberhinaus perfluorierte Seitenketten enthalten.

Nach der Erfindung bevorzugt eingesetzte Perfluorpolyether sind:
a) 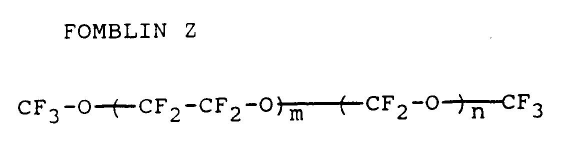 m/n = 2/3 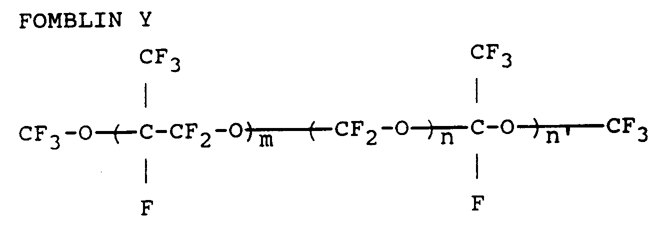 m/n/n'= 40/1/1
   Die kinematische Viskosität dieser reinen PFPE beträgt 470 bis 2000 cSt bei 20°C, insbesondere 1000 bis 1900 cSt. Die Oberflächenspannung beträgt < 25 mN/m bei 20°C. Es werden 0,5 bis 10% Lösungen eingesetzt. Hierzu zählen auch FOMBLIN M, YR, YR 1800, YPL 150 sowie VAC 06/6.
b) 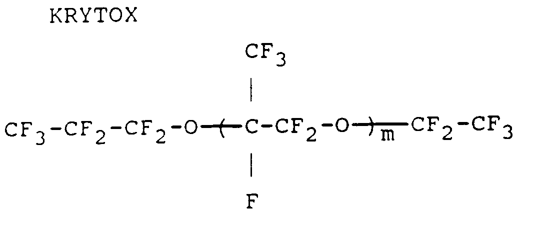
   Die kinematische Viskosität dieser reinen PFPE beträt 40 bis 2000 cSt bei 20°C, insbesondere 200 bis 1800 cSt. Die Oberflächenspannung beträgt < 20 mN/m bei 20°C. Es werden 0,5 bis 10%-ige Lösungen verwendet. Hierzu zählen insbesondere KRYTOX 143AC und KRYTOX 143AD.
c) 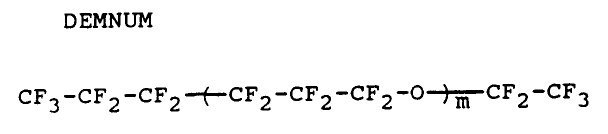
   Die kinematische Viskosität und Oberflächenspannung dieser PFPE liegt im angegebenen Bereich. Es werden 0,5 bis 10%-ige Lösungen eingesetzt.

Ganz besonders bevorzugt von den vorstehend genannten PFPE sind solche, welche perfluorierte Seitenketten enthalten, wie FOMBLIN Y und KRYTOX. Es können aber auch andere PFPE verwendet werden, z.B. solche mit der Bezeichnung HOSTINERT (H272), welche ausgehend von Hexafluorpropenoxid hergestellt sind. Die kinematische Viskosität beträgt 15 mm²/s bei 20°C, die Oberflächenspannung liegt unter 20 mN/m bei 20°C.

In geeigneter Weise können auch funktionalisierte PFPE eingesetzt werden. So ist eine PFPE-Mikroemulsion mit der Bezeichnung Fe 20 einsetzbar, wovon die Ausgangslösung 20%ig an FOMBLIN ist. Diese Mikroemulsion enthält PFPE und fluoriertes Tensid sowie funktionalisiertes PFPE und Alkohol und/oder Fluortensid. Unter bestimmten Bedingungen kann bevorzugt ein PFPE eingesetzt werden, der unter der Bezeichnung Fluorolink^{R} T bzw. Z-Tetrol erhältlich ist. Hierbei handelt es sich um ein PFPE mit vier Hydroxylgruppen. Des weiteren können Carboxylgruppen oder ähnliche polare Gruppen enthalten sein. Es verleiht dem expandierten PTFE Oleophobie und zusätzlich Hydrophilie. Voraussetzung für einen hydrophilen Effekt sind wenigstens zwei Hydroxylgruppen. Dieser PFPE weist jedoch keine Wasserlöslichkeit auf. Derartig modifizierte Membranen sind besonders geeignet für die Flüssigfiltration, beispielsweise um verschmutzte Gewässer zu reinigen.

Als Lösungsmittel kann in bevorzugter Weise Freon^{R} 113, d.h. Trichlortrifluorethan, eingesetzt werden. Die Konzentration der PFPE im Lösungsmittel beträgt 0,1 bis 20 % (Masse), bevorzugt 0,5 bis 10%. Auch perfluorierte Lösungsmittel wie Perfluoroktan oder Hexafluorbenzol können eingesetzt werden. Die Konzentration der PFPE im Lösungsmittel beträgt wieder 0,1 bis 20 % (Masse), bevorzugt jedoch 0,5 bis 10 %. Aus wirtschaftlichen und umwelttechnischen Gründen haben sich perfluorierte niedermolekulare Polyether als besonders günstige Lösungsmittel erwiesen. Solche sind unter der Bezeichnung GALDEN^{R} HT 70, HT 85, HT 90 im Handel erhältlich. Sie weisen einen Siedebereich zwischen 70 und 270°C auf, bevorzugt 70 bis 110°C und ihre kinematische Viskosität liegt im Bereich von 0,5 bis 14 cSt bei 25°C, bevorzugt bei 0,5 bis 1,0 cSt. Die Konzentration der PFPE im Lösungsmittel sollte bei 0,1 bis 20 % (Masse) liegen, bevorzugt zwischen 0,5 bis 10 %. PFPE-Mikroemulsionen sind solche, die unter der Bezeichnung Fe 20 erhalten werden können. Die Emulsion basiert auf Wasser und die wässrige Mikroemulsion kann mit Wasser weiter verdünnt werden. Die bevorzugte Ausgangskonzentration an PFPE liegt bei 20 %. Als Lösungsmittel für durch Hydroxy- und/oder Carboxylgruppen funktionalisierte PFPE (z.B. Fluorolink T) dient insbesondere N-Methyl-1-pyrrolidon. Die Konzentration des PFPE im Lösungsmittel beträgt 0,1 bis 20 Masseprozent, bevorzugt 0, 5 bis 10 %.

Nachfolgend wird die Erfindung anhand von Beispielen näher erläutert. Im einzelnen wurde bei den erzeugten Produkten der Ölwert und der MVTR-Wert bestimmt. Es wurde der Flüssigkeitseintrittsdruck (LEP-Test) und das Verhalten unter Rückflußbedingungen in Gegenwart verschiedener Lösungsmittel bestimmt. Dabei bedeuten:

### Ölwert

Die Ölwerte wurden nach der AATCC Testvorschrift 118 - 1983 ermittelt. Je höher der erhaltene Ölwert ist, desto besser ist die Ölabweisung. Die Ergebnisse sind in Tabelle 1 zusammengestellt.

### MVTR (= Wasserdampfdurchlässigkeit)

Die Messung stellt ein Verfahren in Form einer Bechermethode dar, wobei der Wasserdampfdurchgangswiderstand von Membranen im stationären Zustand ermittelt wird (Standard-Prüfvorschrift BPI 1.4, Bekleidungsphysiologisches Institut e.V. Hohenstein 1987). Die Wasserdampfdurchlässigkeit W_{D} oder der MVTR-Wert ist dabei die zum Wasserdampfdurchgangswiderstand reziproke Materialkenngröße. Die Ergebnisse sind in Tabelle 1 zusammengefaßt.

### LEP-Test (Flüssigkeitsdruck)

Es wird der Druck ermittelt, der notwendig ist, die Testflüssigkeit in die Porenstruktur der getrockneten Membran zu treiben. Dazu wird die Membran in eine Halterung eingespannt und der Druck der Testflüssigkeit langsam mit einem Druckgradienten von 10 mbar/sec an der Unterseite der Membran erhöht. Die Ergebnisse sind in Tabelle 3 zusammengefaßt.

### Lösungsmittelstabilität

Zur Ermittlung ihrer Lösungsmittelstabilität werden die Produkte der Beispiele 1 bis 3, 30 min unter Rückflußbedingungen verschiedenen Lösungsmitteln ausgesetzt. Danach wird erneut der Ölwert bestimmt. Die Ergebnisse sind in Tabelle 3 zusammengefaßt.

### Beispiel 1

Eine GORE-TEX® Membran wird in eine 5%ige Lösung des Perfluorpolyethers FOMBLIN YR 1800 in Trichlorfluorethan (Freon 113) getaucht. Das Lösungsmittel wird entfernt, nach der Behandlung weist die Membran im trockenen Zustand einen Ölwert von 4 auf (Tabelle 1).

### Beispiel 2

Eine GORE-TEX® Membran wird in eine 5%ige Lösung des Perfluorpolyethers FOMBLIN YR 1800 in einem perfluorierten, niedermolekularen Polyether (GALDEN HT 70) getaucht. Das Lösungsmittel wird entfernt. Nach der Behandlung weist die Membran eine Ölwert von 5 auf (Tabelle 1).

### Beispiel 3

Nach der in den Beispielen 1 und 2 angegebenen Methode wird die GORE-TEX® Membran mit unterschiedlichen Perfluorpolyethern in unterschiedlich konzentrierten Lösungen behandelt. Nach der Behandlung zeigen die Membranen gute Ölwerte. Die Ergebnisse sind in Tabelle 1 zusammengestellt.

### Beispiel 4

Eine mit i-Propanol vorbenetzte GORE-TEX® Membran wird in eine 5%ige wässrige Mikroemulsion des Perfluorpolyethers Fe 20 bei 60°C getaucht. Das Lösungsmittel wird bei 130°C entfernt und die so modifizierte Membran einer Wasserdampfbehandlung unterworfen. Die Membran weist im trockenen Zustand einen Ölwert von 4 auf (Tabelle 1).

### Beispiel 5

### Herstellung einer mikroporösen oleophoben PTFE-Membran mit PFPE-Anteil.

113,4 g PTFE (Molekulargewicht > 5 x 10⁶) werden mit 40 ml einer ca. 20%igen Fe 20-Mikroemulsion vermischt und in einen Formkörper verpreßt. Eine anschließende Extrusion bei 234 bar ergibt einen PTFE-Film, der bei 130°C getrocknet wird. Dieser Film wird bei 300°C in Längsrichtung gereckt und weist danach eine Dicke von 0,31 mm auf (Tabelle 4).

### Beispiel 6

Eine GORE-TEX® Membran wird 10 min in eine 7%-ige Lösung von Z-Tetrol in N-Methyl-1-pyrrolidon getaucht, abgequetscht und durch ein Wasserbad gezogen. Die Reste des Lösungsmittels werden thermisch entfernt. Man erhält eine oleophobierte hydrophile Membran. Der Ölwert beträgt 3 und ein Wassertropfen benetzt die Membran nach 40 sec vollständig.

### Beispiel 7 (Vergleich)

113,4 g PTFE (Molekulargewicht > 5 x 10⁶) werden mit 36,5 ml Shellsol T vermischt und in einen Formkörper verpreßt. Die anschließende Extrusion bei 160 bar ergibt eine PTFE-Film, der bei 230°C zur Entfernung des Gleitmittels getrocknet wird. Der Film wird bei 300°C in Längsrichtung gereckt und weist danach eine Dicke von 0,28 mm auf (Tabelle 4).

### Beispiel 8

Eine SOLUTEX Membran (UHMWPE = Ultra High Molecular Weight Polyethylene) mit ca. 1 µm Porengröße und 80 % Porosität wird mit GALDEN HT 70 und anschließend für 10 min bei Raumtemperatur in eine 5 %ige Lösung des PFPE FOMBLIN YR 1800 in GALDEN HT 70 gegeben. Nach dem Herausnehmen der Membran aus der Lösung und der Entfernung des Lösungsmittels bestimmt man einen Ölwert von 2. Der Ausgangswert der Ölabweisung war 0.

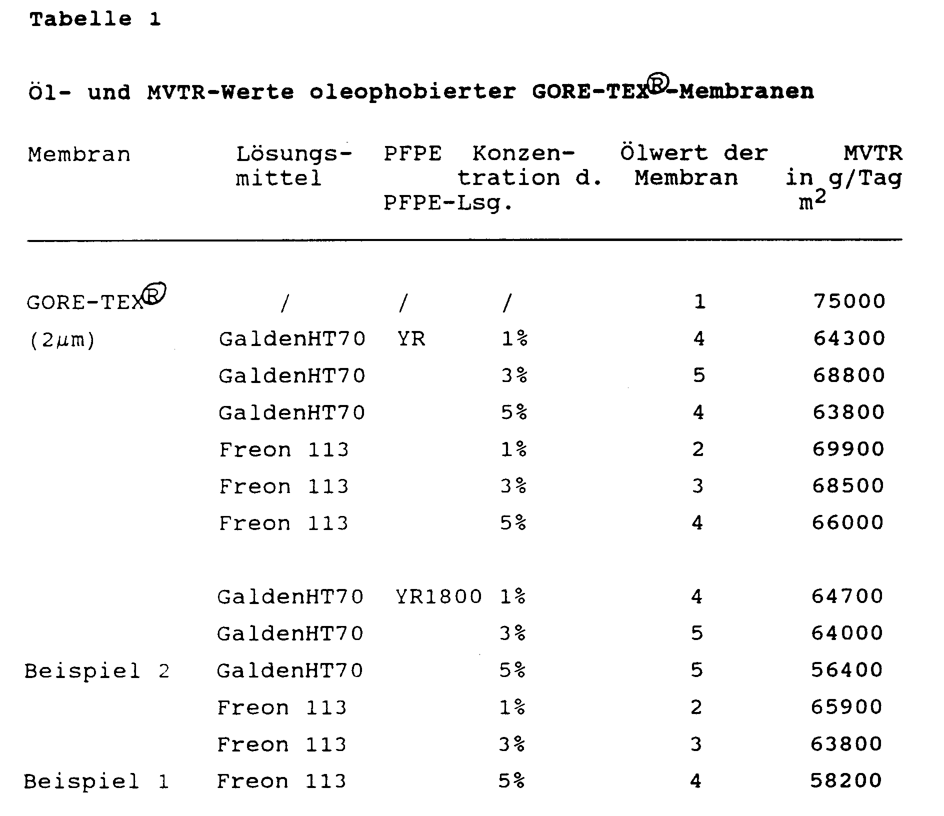

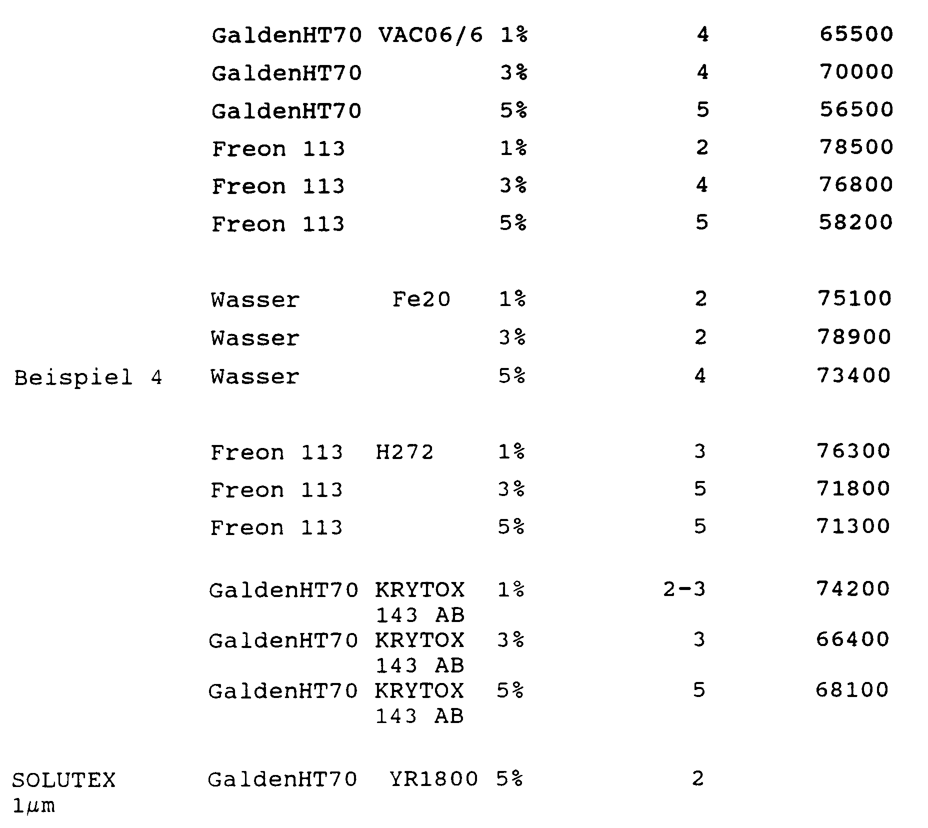

Wie der Tabelle zu entnehmen ist, zeigen alle modifzierten Membranen deutlich erhöhte Ölwerte im Vergleich zur unmodifizierten Membran. Die MVTR-Werte sind nach wie vor ausgezeichnet.

**Tabelle 2**

| **Lösungsmittelstabilität oleophobierter PTFE Membranen (2µm)** | | | | | | | | |
|---|---|---|---|---|---|---|---|---|
| Ölwert | Ölwert nach 30 min Behandlung der Membran unter Rückflußbedingungen | | | | | | | |
| PFPE* | H₂0 | 1n HCl | 1n NaOH | n-Hexan | Shellsol | T Aceton | THF | Benzol |
| YR1800 4 | 4 | 4 | 3 | 4 | 4 | 4 | 3 | 3 |
| YR 4 | 3 | 3 | 4 | 4 | 4 | 4 | 4 | 3 |
| FE 20 4 | 2 | 2 | 2 | 2 | 4 | 4 | 4 | 4 |
| VAC06/6 5 | 4 | 4 | 4 | 2 | 2 | 4 | 4 | 4 |

| | | | | | | | | |
|---|---|---|---|---|---|---|---|---|
| * 5%ige Lösung aus Freon 113 (Fe 20: 5%ige wäßrige Lösung) | | | | | | | | |

Wie der Tabelle eindeutig zu entnehmen ist, weisen die erfindungsgemäß modifizierten Membranen eine ausgezeichnete Lösungsmittelstabilität auf. Die ursprünglichen Ölwerte verändern sich im wesentlichen nicht.

**Tabelle 3**

| **LEP-Test an oloephobierten GORE-TEX® Membranen Flüssigkeitseintrittsdruck in bar** | | | | | | | | |
|---|---|---|---|---|---|---|---|---|
| Oleophobiertes GORE-TEX® (2µm)* | Bremsflüssigkeit | EPX 90 Getriebeöl | Motoröl 15/40 | Glycol | Dieselöl | AFT Getriebeöl | Frostschutz scheibe | Kaltreiniger |
| YR1800 | 0,14 | 0,1 | 0,13 | 0,25 | 0,02 | 0,07 | 0,04 | 0,06 |
| YR | 0,16 | 0,15 | 0,1 | 0,24 | 0,02 | 0,06 | 0,04 | 0,05 |
| H272 | 0,24 | 0,19 | 0,15 | 0,32 | 0,03 | 0,12 | 0,05 | 0,11 |
| VAC 06/6 | 0,17 | 0,15 | 0,13 | 0,26 | 0,04 | 0,09 | 0,03 | 0,06 |
| 5%ige Lösung aus R 113 | | | | | | | | |

**Tabelle 4**

| **Eigenschaften gerechter PTFE-Membranen** | | | | | | |
|---|---|---|---|---|---|---|
| Beispiel | Gewicht (g/50cm) | Bruchdehnung (%) | Reißfestigkeit (N/mm²) | Schmelzwärme (J/g) | Randwinkel* (Grad) | Ölwert |
| 6 | 0,37 | 67 | 14 | 64 | 106 | >1 |
| 7 Vergleichsbeispiel | 0,14 | 94 | 15 | 64 | 92 | 1 |

| | | | | | | |
|---|---|---|---|---|---|---|
| * Randwinkel wurde gegen Methyleniodid bei 15°C ermittelt. | | | | | | |

## Patentansprüche

1. Mikroporöse Polymere, die an ihrer Oberfläche mit einem Perfluorpolyether mit einem mittleren Molekulargewicht von größer 2000, einer kinematischen Viskosität bei 20°C von größer 160 cSt, einem Dampfdruck nach Knudsen von kleiner 5 x 10⁻⁶ bei 20°C und einer Oberflächenspannung bei 20°C von kleiner 25 mN/m oleophob und gegebenenfalls zusätzlich hydrophil modifiziert sind.

2. Mikroporöse Polymere nach Anspruch 1, **dadurch gekennzeichnet**, daß die Polymere aus der Gruppe der Polyethylene, Polyurethane, Polypropylene und Polyester ausgewählt sind.

3. Mikroporöse Polymere nach Anspruch 1, **dadurch gekennzeichnet**, daß das Polymer ein Fluorpolymer ist.

4. Mikroporöse Polymere nach Anspruch 1, **dadurch gekennzeichnet**, daß das Polymer ein Polytetrafluorethylen ist.

5. Mikroporöse Polymere nach einem der Ansprüche 1 bis 4, **dadurch gekennzeichnet**, daß das Polymer eine Membran oder ein Formkörper ist.

6. Mikroporöse Polymere nach einem der Ansprüche 1 bis 4, **dadurch gekennzeichnet**, daß das Polymer ein Granulat ist.

7. Mikroporöse Polymere nach einem der Ansprüche 1 bis 6, **dadurch gekennzeichnet,** daß das Polymer mit 1 bis 40 % Perfluorpolyether, bezogen auf die Gesamtmasse, modifiziert ist.

8. Mikroporöse Polymere nach einem der Ansprüch 1 bis 7, **dadurch gekennzeichnet,** daß der Perfluorpolyether wenigstens zwei Hydroxylgruppen aufweist.

9. Verfahren zur Herstellung eines oleophob und gegebenenfalls zusätzlich hydrophil modifizierten Polymers gemäß Anspruch 1, **dadurch gekennzeichnet,** daß ein Granulat des Polymers mit einem flüssigen Perfluorpolyether oder einer Perfluorpolyether-Mikroemulsion an seiner Oberfläche modifiziert wird.

10. Verfahren nach Anspruch 9, **dadurch gekennzeichnet,** daß das modifizierte Granulat in eine mikroporöse Struktur übergeführt wird.

11. Verfahren nach Anspruch 10, **dadurch gekennzeichnet,** daß das mikroporöse Polymer extrudiert, verstreckt und gegebenenfalls gesintert wird.

12. Verfahren zur Herstellung eines mikroporösen Polymers gemäß Anspruch 1, **dadurch gekennzeichnet,** daß eine mikroporöse Polymermembran oder ein mikroporöser Polymerformkörper mit einem flüssigen Perfluorpolyether oder einer Perfluorpolyether-Mikroemulsion und gegebenenfalls zusätzlich hydrophil modifiziert wird.

13. Verfahren nach einem der Ansprüche 9 bis 12, **dadurch gekennzeichnet,** daß die Lösungen oder Emulsionen den Perfluorpolyether in einer Konzentration von 0,1 bis 20 Gew.% enthalten.

14. Verfahren nach einem der Ansprüche 9 bis 13, **dadurch gekennzeichnet,** daß die Polymere aus der Gruppe der Polyethylene, Polyurethane, Polypropylene, Polyester, Fluorpolymere und Polytetrafluorethylene ausgewählt werden.

## Claims

1. Microporous polymers which are modified on the surface thereof oleophobically and optionally hydrophilically as well with a perfluoropolyether having a mean molecular weight greater than 2000, a kinematic viscosity at 20°C greater than 160 cSt, a Knudsen vapor pressure smaller than 5 x 10⁻⁶ at 20°C and a surface tension at 20°C smaller than 25 mN/m.

2. The microporous polymers of claim 1, characterized in that the polymers are selected from the group of polyethylenes, polyurethanes, polypropylenes and polyesters.

3. The microporous polymers of claim 1, characterized in that the polymer is a fluoropolymer.

4. The microporous polymers of claim 1, characterized in that the polymer is a polytetrafluoroethylene.

5. The microporous polymers of any of claims 1 to 4, characterized in that the polymer is a membrane or formed body.

6. The microporous polymers of any of claims 1 to 4, characterized in that the polymer is granules.

7. The microporous polymers of any of claims 1 to 6, characterized in that the polymer is modified with 1 to 40% perfluoropolyether, based on total mass.

8. The microporous polymers of any of claims 1 to 7, characterized in that the perfluoropolyether has at least two hydroxyl groups.

9. A method for producing the polymer modified oleophobically and optionally hydrophilically as well of claim 1, characterized in that granules of the polymer are modified on the surface thereof with a liquid perfluoropolyether or a perfluoropolyether microemulsion.

10. The method of claim 9, characterized in that the modified granules are converted to a microporous structure.

11. The method of claim 10, characterized in that the microporous polymer is extruded, stretched and optionally sintered.

12. A method for producing the microporous polymer of claim 1, characterized in that a microporous polymer membrane or microporous polymer formed body is modified with a liquid perfluoropolyether or perfluoropolyether microemulsion and optionally hydrophilically as well.

13. The method of any of claims 9 to 12, characterized in that the solutions or emulsions contain the perfluoropolyether in a concentration of 0.1 to 20 wt%.

14. The method of any of claims 9 to 13, characterized in that the polymers are selected from the group of polyethylenes, polyurethanes, polypropylenes, polyesters, fluoropolymers and polytetrafluoroethylenes.

## Revendications

1. Polymères microporeux dont la surface est modifiée pour être oléophobe et éventuellement en plus hydrophile, par un perfluoropolyéther présentant un poids moléculaire moyen supérieur à 2000, une viscosité cinématique à 20 °C supérieure à 160 cSt, une tension de vapeur selon Knudsen inférieure à 5 x 10⁻⁶ à 20 °C et une tension de surface à 20 °C inférieure à 25 mN/m.

2. Polymères microporeux selon la revendication 1 caractérisés en ce que les polymères sont choisi dans le groupes des polyéthylènes, des polyuréthannes, des polypropylènes et des polyesters.

3. Polymères microporeux selon la revendication 1, caractérisés en ce que le polymère est un fluoropolymère.

4. Polymères microporeux selon la revendication 1, caractérisés en ce que le polymère est un polytétrafluoroéthylène.

5. Polymères microporeux selon une des revendications 1 à 4, caractérisés en ce que le polymère est une membrane ou une pièce moulée.

6. Polymères microporeux selon une des revendications 1 à 4, caractérisés en ce que le polymère est un granulat.

7. Polymères microporeux selon une des revendications 1 à 6, caractérisés en ce que le polymère est modifié avec 1 a 40% de perfluoropolyéther par rapport à la masse totale.

8. Polymères microporeux selon une des revendications 1 à 7, caractérisés en ce que le perfluoropolyéther présente au moins deux groupes hydroxyle.

9. Procédé de préparation d'un polymère modifié pour être oléophobe et éventuellement en plus hydrophile, caractérisé en ce que la surface d'un granulat du polymère est modifiée par un perfluoropolyéther liquide ou une microémulsion de perfluoropolyéther.

10. Procédé selon la revendication 9, caractérisé en ce que le granulat modifié est transformé en une structure microporeuse.

11. Procédé selon la revendication 10, caractérisé en ce que le polymère microporeux est extrudé, étiré et éventuellement fritté.

12. Procédé de préparation d'un polymère microporeux selon la revendication 1, caractérisé en ce qu'une membrane polymère microporeuse ou une pièce moulée polymère microporeuse est modifié pour être oléophobe et éventuellement en plus hydrophobe par un perfluoropolyéther liquide ou une microémulsion de perfluoropolyéther.

13. Procédé selon une des revendications 9 à 12, caractérisé en ce que les solutions ou les émulsions contiennent le perfluoropolyéther à une concentration de 0,1 à 20 % en poids.

14. Procédé selon une des revendications 9 à 13, caractérisé en ce que les polymères sont choisi dans le groupe des polyéthylènes, des polyuréthannes, des polypropylènes, des polyesters, des fluoropolymères et des polytétrafluoroéthylènes.
